# EUROPÄISCHE PATENTSCHRIFT

(11) **EP 1 080 879 B1**
(45) Veröffentlichungstag und Bekanntmachung des Hinweises auf die Patenterteilung: **13.12.2006**
(21) Anmeldenummer: 00118489.4
(22) Anmeldetag: 25.08.2000
(51) Int. Cl.: B32B 21/00, B32B 3/02, B44C 5/04, B29C 63/04

(54) **Heissverformbare Pressstoffplatte**
Thermoformable pressed plate
Plaque pressée thermoformable

(30) Priorität: 31.08.1999 DE 19941300
(43) Veröffentlichungstag der Anmeldung: 07.03.2001
(73) Patentinhaber: Trespa International B.V., 6002 SM Weert (NL)
(72) Erfinder: Plug, Johannes Petrus Marinus, Dr., 6107 CJ Stevensweert (NL)
(74) Vertreter: Dohmen, Johannes Maria Gerardus

(56) Entgegenhaltungen:
- EP-A- 0 031 316
- US-A- 2 648 370
- US-A- 4 570 410

## Beschreibung

Die Erfindung betrifft eine heißverformbare Preßstoffplatte, die aus einem Kern und mit diesem heißverpreßten Teilen aufgebaut ist, und eine Dekorationsschicht auf einer oder beiden Oberflächen des Kerns und der damit verbundenen Teile aufweist sowie ein Verfahren zur Herstellung einer heißverformbaren Preßstoffplatte.

Für den Innenausbau in Küche und Bad, die Fassadenverkleidung von Gebäuden, die Einrichtung von Chemie- und Physiklabors werden Platten hergestellt, die gerundete Kanten und gebogene Form aufweisen. Diese Platten besitzen häufig eine dekorative Oberfläche und die Ausgangsmaterialien sind Trägerschichten, die miteinander verklebt werden.

So ist aus der DE-B 2 823 669 ein Verfahren bekannt, bei dem das Erwärmen der Platte in einem solchen Ausmaß vorgenommen wird, daß die Trägerlagen oder die Lagengruppen, die aus mehreren miteinander verbundenen Trägerlagen bestehen, die mittels eines thermoplastischen Bindemittels miteinander verbunden sind, sich beim Verformen im erwärmten Verformungsbereich in Richtung der Plattenoberfläche gegeneinander verschieben und daß während oder nach dem Verformen oder allein nach dem Verformen jeweils zumindest bis zum Wiedererstarren des Bindemittels infolge Abkühlung ein Auftrennen der Bindemittelfugen durch Formhalteorgane der Biegeeinrichtung verhindert wird.

Auf diese Weise wird eine Kunstharz-Schichtpreßstoffplatte aufgebaut, die aus mehreren miteinander heißverpreßten, mit duroplastischen Bindemitteln imprägnierten Trägerlagen besteht und bei einer Verformungstemperatur verformbar ist, die höher als die Heißpreßtemperatur ist. Zwischen den Trägerlagen oder zwischen aus jeweils mehreren miteinander verbundenen Trägerlagen befinden sich Schichten aus einem thermoplastischen Bindemittel, dessen Schmelztemperatur gleich der /oder niedriger als die Verformungstemperatur ist.

In der EP-B-0 081 147 ist eine dekorative, für Außenanwendungen geeignete Bauplatte beschrieben, die aus einem gepreßten Kern aus Fasern besteht, die von Hitze gehärtetem Phenol-Formaldehydharz umgeben sind und eine dekorative Schicht auf einer oder beiden Oberflächen des Kerns aufweist. Der Kern besteht aus Holzfasern und/oder Cellulosefasern mit einer maximalen Länge von 20 mm, die mit einem hitzehärtbarem Phenol-Formaldehydharz in wäßriger Lösung oder Dispersion beschichtet sind. Eine Ausführungsform dieser Bauplatte wird in der Weise hergestellt, daß eine oder mehrere übereinander angeordnete, mechanisch vorverdichtete Schichten auf Basis von Holzteilchen, welche mit dem hitzehärtbaren Phenol-Formaldehydharz imprägniert sind, unter Ausbildung des Kerns der Bauplatte in der Hitze verpreßt werden, wodurch das Kunstharz gehärtet wird. Die Oberflächen des Kerns werden mit einer oder zwei dekorativen Schichten versehen. Die mit der Harzlösung bzw. Harzdispersion imprägnierten Holzfasern werden bis zu einer Restfeuchte von 2 bis 15 Gew.-% getrocknet, wobei das Harz teilweise aushärtet. Die getrockneten Fasern formen in Wirrlage eine bahnförmige Matte, die mechanisch vorverdichtet und danach in einer oder mehreren übereinander angeordneten Schichten unter harzhärtenden Bedingungen erhitzt und verpreßt wird. Die dekorativen Schichten werden auf die vorverdichtete Matte oder nach dem Verpreßen auf die Kernschicht aufgebracht. US-A-4,570,410 offenbart eine im Randbereich verdickte Pressspauplatte mit dekorativer Aussensdricht. Die Verdickung wird durch Einsatz einer Kombination aus Keil und aushärtbarer Füllstoff-/Klebermischung erzeugt.

Bei solchen heißverformten dekorativen Hochdruck-Schichtpreßstoffplatten (HPL) handelt es sich um sogenannte Kompaktformteile, deren Aufbau entweder dem von Kompaktplatten nach EN 438-1 bzw. DIN 16926 bzw. ISO 4586 entspricht oder einem derartigen Aufbau ähnlich ist. Die Komponenten bzw. Schichten derartiger Kompaktplatten bestehen aus den gleichen Materialien und werden in den gleichen Hochdruckpressen hergestellt wie sonstige Platten auf Basis härtbarer Harze und können je nach Formungsverfahren fallweise Klebeschichten enthalten. Kompaktformteile sind selbsttragende Elemente mit stabilen Rundungen und haben wie Kompaktplatten ein- bzw. beidseitige dekorative Farbgebung mit glatter oder strukturierter Oberfläche und weisen im allgemeinen geschlossene Schnittkanten auf.

Es sind auch Verfahren bekannt, bei denen melaminbeharzte Dekor- und phenolbeharzte Kernpapierbahnen in S-förmigen oderL-förmigen Strukturen definierterAbmessungunterHitze und hohem Druck gehärtet werden. Bei einem anderen bekannten Verfahren wird in Bereichen der vorzunehmenden Biegung durch Einlegen von Trennstreifen bei der Herstellung die Dicke der Kompaktplatten einseitig begrenzt, wobei sich die Dicke nach dem gewünschten Biegeradius richtet. In den dünneren Plattenbereichen ist dann eine nachträgliche Formgebung in stationären Biegeanlagen unter Hitze möglich. Nach Abkühlung in einer Spannvorrichtung bleiben die Teile geformt, wobei die mechanische Festigkeit der Rundungsbereich durch die verbleibende Wandstärke bestimmt ist.

Bei einem weiteren bekannten Verfahren wird die Kompaktplatte in den zu verformenden Bereichen einseitig bis auf eine geringe Wandstärke ausgefräst, die vom gewünschten Biegeradius abhängt und in stationären Biegeanlagen unter Wärme geformt. Die ausgefrästen Hohlräume werden noch in der Spannvorrichtung mit härtenden Kunstharzen ausgegossen oder durch Einsetzen von Paßstücken verfestigt.

Die Herstellung von Formteilen aus Kompaktplatten und einer nachträglich aufgeklebten HPL-Kompaktplatte geschieht bei einem weiteren bekannten Verfahren in der Weise, daß die Kompaktplatte vor der Klebung an den später zu formenden Stellen angefräst oder mit einer Distanzleiste ausgefüllt wird. Eine weitere Möglichkeit besteht darin, zwei Kompaktplatten als Träger im vorgesehen Winkel zusammenzufügen und eine der Kanten zu einer konvexen Rundung abzufräsen. Auf diese abgefräste Fläche wird dann die HPL-Kompaktplatte geklebt. Durch rückseitiges Ausfräsen bzw. Entfernen der Distanzleiste können konkave Rundungen hergestellt werden.

Bei der Herstellung von kompakten Formteilen aus HPL-Einzellagen werden diese Einzellagen in Dicken bis zu 1 mm mit beidseits geschliffenen Kernplatten zu Plattenpaketen gewünschter Dicke geschichtet und dann in Spannformen mit beispielsweise lösungsmittelfreien Zweikomponentenklebern zusammengeklebt. Die fugendichte Klebung dernichtsaugendenHPL-Einzellagen stellt hohe Anforderungen an die Zweikomponentenkleber. Die geschichteten Plattenpakete werden anschließend in einer Biegevorrichtung in gewünschter Weise gebogen.

Die bekannten Verfahren, bei denen das Material im Verformungsbereich ausgefräst wird und die Hohlräume in dem Mantel in der Spannvorrichtung mit Kunstharzgießmasse ausgegossen oder durch Einsetzen von Paßstücken verfestigt werden, sind wegen der großen Anzahl der Verarbeitungsschritte wie Ausfräsen, Biegen, Ausgießen bzw. Anfertigen von Paßstücken, Nachbearbeitung aufwendig und die Produktqualität läßt zu wünschen übrig, da beispielsweise zylindrische Formen oft unregelmäßig geformt sind, an den Elementenenden vielfältige Haarrisse auftreten und das Material nur als einseitig dekoratives Element einsetzbar ist. Bei der Verformung in einer Formpresse ist zwar die Produktqualität gut, jedoch sind die Matrizen für die Formpressung sehr teuer und wegen ihrer mangelnden Flexibilität nicht einsetzbar für unterschiedliche Formen.

Die Verformbarkeit von nichtausgehärteten, zu einer Platte zusammengeschichteten Lagen aus HPL-Kompaktplatten, wobei die Außenseiten einer solcher Platte mit Melamin- oder Acrylharzdeckschichten ausgerüstet sind, wird durch die geringe Dehnbarkeit der dekorativen Deckschichten begrenzt.

Aufgabe der Erfindung ist es, eine Platte der eingangs beschriebenen Art so weiterzuentwickeln, daß ohne Verformungsarbeitzu leisten eine in den Randbereichen verdickte und gerundete Platte erhalten wird, die konstante Dichte und von Haarrissen, Sprüngen und dergleichen Mängel weitgehend freie Dekorationsschicht bzw. -schichten besitzt.

Diese Aufgabe wird erfindungsgemäß in der Weise gelöst, daß als Kern eine vorgefertigte ebene Platte aus Holz- und/oder Cellulosefasern, die mit Hitze gehärtetem Phenol-Formaldehydharz imprägniert sind, vorgesehen ist und daß die Platte entlang einem oder mehreren ihrer Randbereiche mit dem gleichem Material, aus dem die vorgefertigte Platte besteht, verdickt ist.

Die vorgefertigte Platte ist beispielsweise aus der zuvor angeführten EP-B-0 081 147 bekannt und besteht je nach gewünschter Dicke aus einer oder mehreren ebenen, rechteckförmigen Platten, die aus Holzund/oder Cellulosefasern, die mit Hitze härtbarem Phenol-Formaldehydharz imprägniert sind, aufgebaut sind. Es werden mehrere übereinander angeordnete, mechanisch vorverdichtete Schichten unter Hitzeanwendung miteinander verpreßt. Die so vorgefertigte ebene Platte wird auch aus pre-peg bezeichnet. In Weiterbildung der Erfindung besteht das Material aus vorgefertigten Streifen, die einen rechteckförmigen Querschnitt, einen rechteckartigen Querschnitt mit einer bogenförmigen Querschnittsseite oder einen trapezartigen Querschnitt mit einer schrägen Seite aufweisen. Zweckmäßigerweise schließen die Streifen mit Kanten der vorgefertigten ebenen Platte ab und ist die bogenförmigen Querschnittsseite der Streifen bzw. die schräge Seite des Streifen von den Kanten weg in der Innere der Platte gerichtet. Es ist auch denkbar, daß die bogenförmige Querschnittsseite oder die schräge Seite zu den Kanten der Platte hin gerichtet sind.

Bei einer weiteren Ausführungsform der Preßstoffplatte besteht das Material zum Verdicken der Randbereiche aus losen mit Harz imprägnierten Holz- und Cellulosefasern, die eine oder mehrere Mulden einer Preßform ausfüllen, zwischen der und einer weiteren Preßform die vorgefertigte ebene Platte sowie das Material zusammen mit einer oder zwei Dekorationsschichten zur Preßstoffplatte verpreßt ist. Die weitere Ausgestaltung der erfindungsgemäßen Preßstoffplatte ergibt sich aus den Merkmalen der Ansprüche 7 bis 13.

Im Rahmen der Erfindung soll auch ein Verfahren zur Herstellung von Preßstoffplatten geschaffen werden, das mit einer sehr geringen Anzahl von Verfahrensschritten auskommt. Diese Aufgabe wird verfahrensgemäß gelöst durch Einlegen einer vorgefertigten Platte aus Holzund/oder Cellulosefasern in eine geöffnete Presse, die eine mit einer oder mehreren Mulden ausgestattete Preßform und eine glatte Preßform enthält, Anordnen des gleichen Materials, aus dem die Platte gefertigt ist, entlang zumindest einem der Randbereiche der Platte, Aufbringen einer oder zweier Dekorationsschichten auf die Oberfläche(n) der mit mit dem Material zusammengefügten Platte und Heißverpressen aller zwischen den Preßformen befindlichen Teile.

In Ausgestaltung des Verfahrens wird als Materials zumindest ein aus dem gleichen Material wie die Platte gefertigter Streifen entlang einem der Randbereiche der Platte aufgebracht.

In einer anderen Ausgestaltung des Verfahrens wird bzw. werden eine oder mehrere Mulden der Preßform mit dem gleichen Holz- und/oder Cellulosefasermaterial aufgefüllt, aus dem die vorgefertigte Platte besteht und werden eine oder zwei Dekorationsschichten auf die Oberfläche(n) der mit dem Holz- und/oder Cellulosefasermaterial in de(r)n Mulde(n) zusammengefügten Platte aufgebracht und unter Hitze und Druck zwischen den Preßformen miteinander verpreßt. Verfahrensgemäß werden die Teile zwischen den Preßformen bei einer Temperatur von 130 bis 180 °C und mit einem Druck von 60 bis 110 bar miteinander verpreßt.

Mit der Preßstoffplatte werden die Vorteile erzielt, daß sie eine gleichmäßige Dichte und weitgehend homogene physikalische, chemische und technische Eigenschaften besitzt und daß in den Randbereichen die Dicke und die Gestalt der verdickten Randbereiche auf sehr einfache Weise variabel gestaltet werden kann. Von Vorteil ist auch, daß die Preßstoffplatte mit jeder herkömmlichen Preßanlage hergestellt werden kann, wobei nur jeweils eine einzelen Preßform ausgetauscht werden muß um eine andere Ausführungsform der Preßstoffplatte zu erhalten.

Die Erfindung wird im folgenden anhand der Zeichnungen näher erläutert. Es zeigen:
- Fig. 1: eine Draufsicht auf eine vorgefertigte Platte als Kern einer Preßstoffplatte mit zwei entlang sich gegenüberliegenden Randbereichen der Platte aufgelegten Streifen,
- Fig. 2: schematisch eine Ansicht einer geöffneten Presse, mit eingelegter vorgefertigter Platte, Dekorationsschichten, zusätzlichem Material zum Verdicken der Randbereiche der Platte,
- Fig. 3a): einen Querschnitt einer Preßstoffplatte mit zwei sich gegenüberliegenden verdickten Randbereichen,
- Fig. 3b): eine Draufsicht auf eine Preßstoffplatte mit vier verdickten Randbereichen,
- Fig. 4a, 4b und 4c: Querschnitte dreier Ausführungsformen von Streifen,
- Fig. 5: schematisch zwei mit Holz- und/oder Cellulosefasern gefüllte Mulden einer Preßform, und
- Fig. 6a, 6b, 6c: jeweils eine Preßform mit einer, drei und vier Mulden in perspektivischer Ansicht.

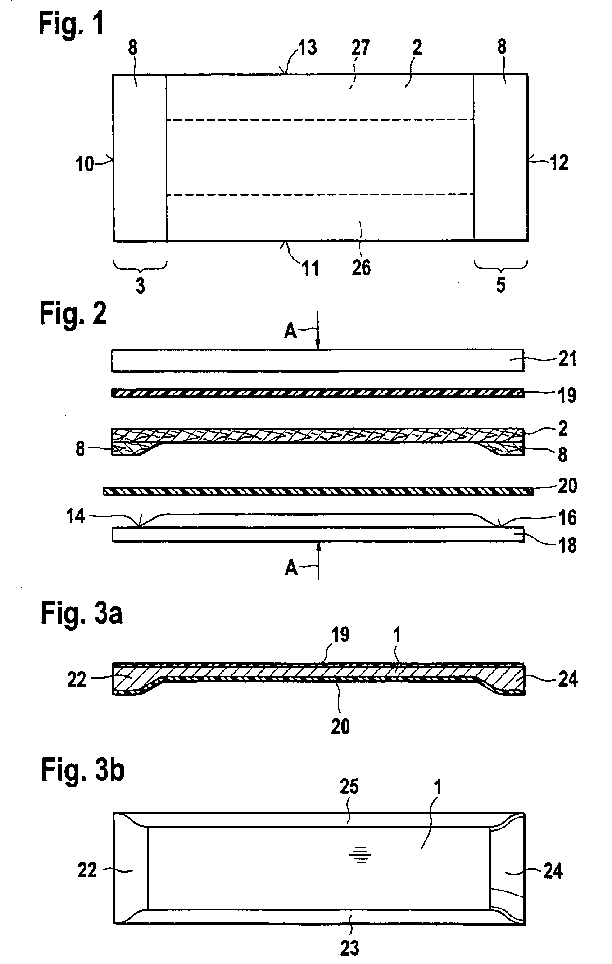

Eine in Figur 1 in Draufsicht gezeigte vorgefertigte ebene Platte 2 ist in ihren sich gegenüberliegenden Randbereichen 3 und 5 mit Streifen 8, 8 belegt, die entlang von Kanten 10, 12 der Platte 2 ausgerichtet sind. Die Platte 2 und die Streifen 8, 8 formen den Kern einer Preßstoffplatte 1, wie sie in Figur 3a im Querschnitt dargestellt ist. Bei dieser Ausführungsform sind gestrichelt angedeutete Randbereiche 26, 27 nicht mit Streifen ausgestattet.

Die Platte 2 wird beispielsweise aus Trägerlagen, bestehend aus Holz- und/oder Cellulosefaserteilchen nach dem in der EP-B-0 081 147 beschriebenen Verfahren, unter Weglassung von dekorativen Schichten, vorgefertigt. Dies geschieht derart, daß eine oder mehrere übereinander angeordnete, mechanisch vorverdichtete Schichten auf der Basis von Holz- und/oder Cellulosefaserteilchen, welche mit einem hitzehärtbarem Phenol-Formaldehydharz imprägniert sind, unter Hitzeanwendung verpreßt werden, wobei das Kunstharz gehärtetwird. Hierzu werden Holzfasern und/oder Cellulosefasern mit einer maximalen Länge von 20 mm mit mehr als 15 und bis zu 90 Gew.-% des hitzehärtbaren Phenol-Formaldhydharz, bezogen auf das Fasergewicht, in wäßriger Lösung oder Dispersion beschichtet oder imprägniert. Die Fasern werden bis zu einer Restfeuchte von 2 bis 15 Gew.-% getrocknet, wobei das Harz teilweise aushärtet und die getrockneten Fasern in Wirrlage zu einer bahnförmigen Matte geformt werden. Die Matte wird mechanisch vorverdichtet und danach in einer oder mehreren übereinander angeordneten Schichten unter harzhärtenden Bedingungen erhitzt und verpreßt. Die Matten besitzen im allgemeinen schon das erwünschte Plattenformat, andernfalls werden aus den Matten die Platten mit den erforderlichen Abmessungen gefertigt. Die Streifen 8, 8 bestehen aus dem gleichen Material wie die vorgefertigte Platte 2.

In Figur 2 ist schematisch eine Ansicht einer geöffneten Presse gezeigt, die zwei Preßformen 18 und 21 aufweist. Die Preßform 18 ist als Matrize ausgebildet, in der je nach Bedarf ein bis vier Mulden 14, 15, 16, 17 vorhanden sind, die entlang den Randbereichen der Preßform 18 angeordnet sind. Im vorliegenden Fall ist die Preßform 18 mit zwei sich gegenüberliegenden Mulden 14, 16 ausgestattet. Die weitere Preßform 21 ist ein glattes Preßblech, das weder Mulden noch Erhebungen aufweist. Zwischen den geöffneten Preßformen 18, 21 sind zwei Dekorationsschichten 19, 20 angeordnet, zwischen denen sich die vorgefertigte Platte 2 mit den darauf angebrachten Streifen 8, 8 befindet. Die Preßformen 18, 21 werden in Richtung der Pfeile A, A zusammengeführt und unter Wärmeanwendung und entsprechend hohem Druck werden die Dekorationsschichten 18, 20 und die vorgefertigte Platte 2 mit den Streifen 8 miteinander verpreßt. Zweckmäßigerweise ist die in Figur 2 untere Dekorationsschicht 20 etwas länger als die obere Dekorationsschicht 19, da die untere Dekorationsschicht 20 eine größere Oberfläche abdecken muß als die obere Dekorationsschicht 19. Die größere Oberfläche ergibt sich durch die verdickten Randbereichen der einen Oberfläche des Verbunds aus vorgefertigter Platte 2 und den Streifen 8. Die Streifen 8 haben weitgehend den gleichen Umriß wie die Mulden 14 und 16 der Preßform 18.

In Figur 3a ist im Querschnitt eine fertige Preßstoffplatte 1 dargestellt, die zwei verdickte Randbereiche 22 und 24 besitzt, die sich gegenüberliegen. Die Preßstoffplatte 1 istbeidseitigmit Dekorationsschichten 19 und 20 ausgerüstet. Selbstverständlichkann auch nur eine Dekorationsschicht aufgebracht werden, falls dies erwünscht ist, d.h. es kann dann beim Preßvorgang entweder die Dekorationsschicht 19 allein oder die Dekorationsschicht 20 allein zwischen den Preßformen angeordnet werden.

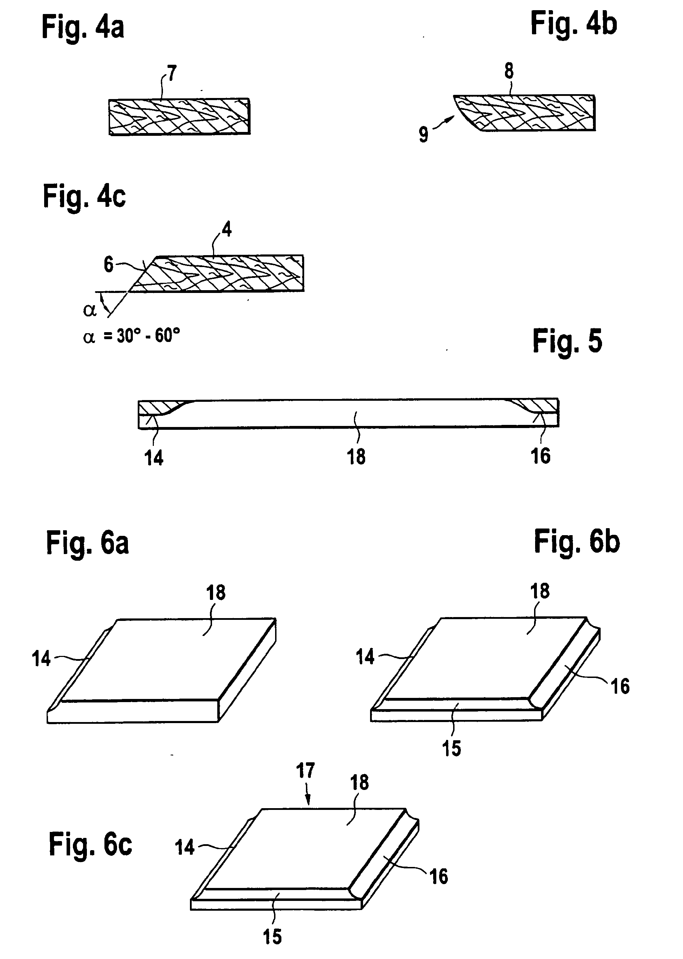

Eine Preßstoffplatte 1 mit vier verdickten Randbereichen 22, 23, 24, und 25 ist in Figur 3b dargestellt. Für die Herstellung dieser Preßstoffplatte wird eine Preßform 18 wie in Figur 6c gezeigt, beim Preßvorgang verwendet. Beim Einsatz der Preßformen gemäß den Figuren 6a und 6b und von Streifen 4, 7 oder 8 in einem oder drei Randbereichen der Platte 2 werden Preßstoffplatten hergestellt, die in einem Randbereich 22 oder in drei Randbereichen 22, 23, 24 verdickt sind.

Die Figuren 4a bis 4c zeigen drei unterschiedliche Ausführungsformen von Streifen 7, 8 und 4. Der Streifen 7 nach Figur 4a besitzt einen rechteckförmigen Querschnitt und für den Fall, daß ein derartiger Streifen mit der vorgefertigen ebenen Platte 2 hitzeverpreßt werden soll, wird die Preßform 18 derart ausgestaltet, daß die Mulden rechteckförmigen Querschnitt besitzen. In Figur 4b ist die bevorzugte Ausführungsform des Streifens 8 dargestellt, der einen rechteckartigen Querschnitt besitzt, wobei nur die eine Querschnittseite 9 bogenförmig verläuft. Der Streifen 4 nach Fig. 4c hat einen trapezähnlichen Querschnitt mit einer schrägen Seite 6, die mit der Basisfläche einen Winkel α von 20 bis 70 °, bevorzugt 30 bis 60 °, insbesondere 45 ° einschließt. Die Streifen 4, 7, 8 werden auf der vorgefertigten Platte 2 stets so angeordnet, daß sie mit den Kanten 10, 11, 12, 13 der Platte 2 abschließen, wobei bei Verwendung von Streifen 8 die bogenförmige Querschnittseite 9 von den Kanten weg in der Innere der Platte 2 gerichtet ist. Selbstverständlich können die Streifen 8 bei Bedarf auch um 180° gedreht gegenüber dieser Stellung mit der ebenen vorgefertigten Platte 2 verbunden werden. Es muß dann nur die Muldenausrichtung in der Preßform dementsprechend auch um 180° gedreht sein. Neben den in den Figuren 4a bis 4c dargestellten Ausführungsformen der Streifen 7, 8, 4 sind auch noch andere Querschnittsformen möglich, die jeder Fachmann je nach Bedarf selbst gestalten kann. So ist es beispielsweise denkbar, daß der Streifen zwei bogenförmigen Querschnittseiten aufweist, wobei der bogenförmige Verlauf parabel-, ellipsen- oder kreisförmig sein kann. Anstelle von vorgefertigten Streifen können als Material zum Verdicken der Randbereiche der Platte 2 lose Holz- und/oder Cellulosefasern wie in Fig. 5 dargestellt eingesetzt werden, die mechanisch verdichtet in eine oder mehrere der Mulden 14 bis 17 der Preßform 18 eingefüllt werden. Diese Holz- und/oder Cellulosefasern sind mit Phenol-Formaldehydharz imprägniert und besitzen die gleiche Konstitution wie die für die Herstellung der vorgefertigten Platte 2 verwendeten Fasern. Die Herstellung einer Preßstoffplatte 1 erfolgt dabei in der Weise, daß zunächst nur die vorgefertigte ebene Platte 2 in die geöffnete Presse eingelegt wird, diese kurzzeitig geschlossen und so lange mit Hitze und Druck beaufschlagt wird, bis die losen Fasern in den Mulden der Preßform 18 mit der vorgefertigten Platte 2 fest verbunden sind. Danach wird die Presse geöffnet und je nach Bedarf eine oder zwei Dekorationsschichten auf die Oberfläche(n) der Platte 2 mit den verdickten Randbereichen aufgebracht. Danach wird die Presse wieder geschlossen und die Heißverpressung so lange fortgesetzt, bis eine entsprechende Preßstoffplatte 1, wie in Figur 3 gezeigt, hergestellt ist.

Die Preßstoffplatte 1 besitzt eine gleichmäßige Dichte im Bereich von 1,1 bis 1,5 g/cm³, insbesondere von 1,4 g/cm³ über ihren Gesamtquerschnitt, d.h. auch unter Einschluß ihrer verdickten Randbereiche. Es werden Preßstoffplatten mit Dicken im unverdickten Randbereich von 2 bis 30 mm, insbesondere von 2 bis 20 mm und im verdickten Randbereich von 4 bis 40 mm, insbesondere von 4 bis 30 mm gefertigt. Sowohl die Dichte als auch die physikalischen und technischen Eigenschaften der Preßstoffplatte 1 sind weitgehend gleichmäßig über den unverdickten und den verdickten Bereich der Preßstoffplatte 1 ausgebildet.

Die Dekorationsschichten 19, 20 bestehen aus einer Kunststoff-, Papier- oder Holzfolie und/oder Lackschicht und besitzen ein Flächengewicht von 60 bis 420 g/m², insbesondere von 140 bis 300 g/m². Des weiteren können die Dekorationsschichten 19, 20 aus einem vernetzten Acryl-, Urethan-, Epoxid- oder Melaminharz bestehen, wobei das Acrylharz pigmentiert sein kann. Ferner ist es möglich, daß Füllstoffe und/oder Farbstoffe dem Harz zugesetzt sind. In einer weiteren Ausführungsform bestehen die Dekorationsschichten 19, 20 aus Dekorpapieren, die mit Melamin beharzt sind. Insbesondere bei Bauplatten aber auch bei Platten für den Innenausbau sowie für die Verwendung in Labors enthält das zum Imprägnieren der Holz- und/oder Cellulosefasern verwendete Phenol-Formaldehydharz ein flammhemmendes Additiv.

Die Preßformen 18, 21 werden mit einem Druck von 60 bis 110 bar, insbesondere von 90 bar beaufschlagt und auf eine Temperatur im Bereich von 130 bis 180 °C erhitzt.

In den Figuren 6a, 6b und 6c sind verschiedene Ausführungsformen der Preßform 18 dargestellt. Die Ausführungsform 18 nach Figur 6a besitzt eine einzige Mulde 14, während die Ausführungsform nach Figur 6b drei Mulden 14, 15 und 16 aufweist. In Figur 6c ist eine Preßform 18 dargestellt, die vier Mulden 14, 15, 16 und 17 besitzt, die sich jeweils entlang den Randbereichen der Preßform 18 erstrecken. Selbstverständlich sind noch weitere Ausführungsformen der Preßform 18 für den Fachmann unproblematisch zu gestalten, die es ermöglichen entsprechend strukturierte Oberflächen für die Preßstoffplatte 1 auszubilden.

## Patentansprüche

1. Heißverformbare Preßstoffplatte, die aus einem Kern und mit diesem heißverpreßten Teile aufgebaut ist, und eine Dekorationsschicht auf einer oder beiden Oberflächen des Kerns und der damit verbundenen Teile aufweist, **dadurch gekennzeichnet, daß** als Kern eine vorgefertigte ebene Platte (2) aus Holz- und/oder Cellulosefasern, die mit hitzegehärtetem Phenol-Formaldehydharz imprägniert sind, vorgesehen ist und daß die Platte (2) entlang einem oder mehreren ihrer Randbereiche (3, 4, 26, 27) mit dem gleichen Material aus dem die vorgefertigte Platte besteht, verdickt ist, wobei die Dichte weitgehend gleichmaßig über den unverdickten und den verdickten Bereich der Preßstoffplatte (1) ausbebildet ist.

2. Preßstoffplatte nach Anspruch 1, **dadurch gekennzeichnet, daß** das Material aus vorgefertigten Streifen (7) besteht, die einen rechteckförmigen Querschnitt aufweisen.

3. Preßstoffplatte nach Anspruch 1, **dadurch gekennzeichnet, daß** das Material aus vorgefertigten Streifen (8) besteht, die einen rechteckartigen Querschnitt mit einer bogenförmigen Querschnittseite (9) aufweisen.

4. Preßstoffplatte nach Anspruch 1, **dadurch gekennzeichnet, daß** das Material aus vorgefertigten Streifen (4) besteht, die einen trapezartigen Querschnitt mit einer schrägen Seite (6) aufweisen, die mit der Basisfläche des Streifens einen Winkel α von 20 bis 70°, insbesondere von 45 ° einschließt.

5. Preßstoffplatte nach einem der Ansprüche 2 bis 4, **dadurch gekennzeichnet, daß** die Streifen (4, 7, 8) mit Kanten (10, 11, 12, 13) der vorgefertigten ebenen Platte (2) abschließen, und daß die bogenförmige Querschnittseite (9) der Streifen (8) bzw. die schräge Seite (6) der Streifen (4) von den Kanten weg in das Innere der Platte (2) gerichtet ist.

6. Preßstoffplatte nach Anspruch 1, **dadurch gekennzeichnet, daß** das Material zum Verdicken der Randbereiche der Platte (2) aus losen mit Harz imprägnierten Holz- und/oder Cellulosefasern besteht, die eine oder mehrere Mulden (14, 15, 16, 17) einer Preßform (18) ausfüllen, zwischen der und einerweiteren Preßform (21) die vorgefertigte ebene Platte (2) sowie das Material zusammen mit einer oder zwei Dekorationsschichten (19; 20) zur Preßstoffplatte verpreßbar ist.

7. Preßstoffplatte nach den Ansprüchen 1 bis 6, **dadurch gekennzeichnet, daß** ein Randbereich (22), zwei sich gegenüberliegende Randbereiche (22, 24), drei (22, 23, 24) oder alle vier Randbereiche (22, 23, 24, 25) der Preßstoffplatte (1) verdickt sind.

8. Preßstoffplatte nach Anspruch 1, **dadurch gekennzeichnet, daß** sie eine gleichmäßige Dichte im Bereich von 1,1 bis 1,5 g/cm³, insbesondere von 1,4 g/cm³ über ihren Gesamtquerschnitt, unter Einschluß ihrer verdickten Randbereiche besitzt.

9. Preßstoffplatte nach Anspruch 1, **dadurch gekennzeichnet, daß** ihre Dicke im unverdickten Randbereich 2 bis 30 mm und im verdickten Randbereich 4 bis 40 mm beträgt.

10. Preßstoffplatte nach einen oder mehreren der Ansprüche 1 bis 9, **dadurch gekennzeichnet, daß** das Phenol-Formaldehydharz ein flammhemmendes Additiv enthält.

11. Preßstoffplatte nach Anspruch 1, **dadurch gekennzeichnet, daß** die Dekorationsschichten (19; 20) aus einer Kunstostoff-, Papier- oder Holzfolie und/oder Lackschicht bestehen und ein Flächengewicht von 60 bis 420 g/m², insbesondere von 140 bis 300 g/m² haben.

12. Preßstoffplattenach Anspruch 11, **dadurch gekennzeichnet, daß** die Dekorationsschichten (19; 20) aus einem vernetzen Acryl-, Urethan-, Epoxid- oder Melaminharz bestehen, daß das Acrylharz pigmentiert ist und daß Füllstoffe und/oder Farbstoffe dem Harz zugesetzt sind.

13. Preßstoffplatte nach Anspruch 1, **dadurch gekennzeichnet, daß** die Dekorationsschichten (19; 20) aus Dekorpapieren bestehen, die mit Melamin beharzt sind.

14. Verfahren zur Herstellung einer heißverformbaren Preßstoffplatte nach einem oder mehreren der Ansprüche 1 bis 13, **gekennzeichnet durch** Einliegen einervorgefertigten Platte (2) aus Holz- und/oder Cellulosefasern in eine geöffnete Presse, die eine mit einer oder mehreren Mulden ausgestattete Preßform (18) und eine glatte Preßform (21) enthält, Anordnen des gleichen Materials aus dem die Platte (2) gefertigt ist, entlang zumindest einem der Randbereiche der Platte, Aufbringen einer oder zweier Dekorationsschichten (19; 20) auf die Oberfläche(n) der mit dem Material zusammengefügten Platte (2) und Heißverpressen aller zwischen den Preßformen befindlichen Teile.

15. Verfahren nach Anspruch 14, **dadurch gekennzeichnet, daß** als Material zumindest ein aus dem gleichen Material wie die Platte (2) gefertigter Streifen (4; 7; 8)entlang einem der Randbereiche der Platte (2) aufgebracht wird.

16. Verfahren nach Anspruch 14, **dadurch gekennzeichnet, daß** eine oder mehrere Mulden (14 bis 17) der Preßform (18) mit dem gleichen Holz- und/oder Cellulosefasermaterial aufgefüllt wird bzw. werden, aus dem die vorgefertigte Platte (2) besteht und daß eine oder zwei Dekorationsschichten (19; 20) auf die Oberfläche(n) der mit dem Holz- und/oder Cellulosefasermaterial in de(r)n Mulde(n) zusammengefügten Platte aufgebracht werden und unter Hitze und Druck zwischen den Preßformen(18; 21) miteinander verpreßt werden.

17. Verfahren nach Anspruch 14, **dadurch gekennzeichnet, daß** die Teile in der Preßform bei einer Temperatur von 130 bis 180 °C und mit einem Druck von 60 bis 110 bar miteinander verpreßt werden.

## Claims

1. Hot-mouldable laminated sheet which is composed of a core and parts hot-pressed with said core and has a decorative layer on one or both surfaces of the core and of the parts bonded thereto, **characterized in that** a prefabricated flat sheet (2) of wood and/or cellulose fibres, which have been impregnated with heat-cured phenol/formaldehyde resin, is provided as the core and **in that** the sheet (2) is thickened along one or more of its edge regions (3, 4, 26, 27) with the material of which the prefabricated sheet consists, the density being substantially uniform over the unthickened and thickened region of the laminated sheet (1).

2. Laminated sheet according to Claim 1, **characterized in that** the material comprises prefabricated strips (7) which have a rectangular cross-section.

3. Laminated sheet according to Claim 1, **characterized in that** the material comprises prefabricated strips (8) which have a rectangle-like cross-section with an arc-like cross-sectional side (9).

4. Laminated sheet according to Claim 1, **characterized in that** the material comprises prefabricated strips (4) which have a trapezoidal cross-section with an oblique side (6) which makes an angle α of from 20 to 70°, in particular of 45°, with the base surface of the strip.

5. Laminated sheet according to any of Claims 2 to 4, **characterized in that** the strips (4, 7, 8) terminate at edges (10, 11, 12, 13) of the prefabricated flat sheet (2) and **in that** the arc-like cross-sectional side (9) of the strips (8) or the oblique side (6) of the strips (4) is directed away from the edges towards the interior of the sheet (2).

6. Laminated sheet according to Claim 1, **characterized in that** the material for thickening the edge regions of the sheet (2) comprises loose wood and/or cellulose fibres which are impregnated with resin and fill one or more cavities (14, 15, 16, 17) of a mould (18), between which and a further mould (21) the prefabricated flat sheet (2) and the material together with one or two decorative layers (19; 20) can be pressed to form the laminated sheet.

7. Laminated sheet according to any of Claims 1 to 6, **characterized in that** one edge region (22), two opposite edge regions (22, 24) or three (22, 23, 24) or all four edge regions (22, 23, 24, 25) of the laminated sheet (1) have been thickened.

8. Laminated sheet according to Claim 1, **characterized in that** it has a uniform density in the range from 1.1 to 1.5 g/cm³, in particular 1.4 g/cm³, over its total cross-section, including its thickened edge regions.

9. Laminated sheet according to Claim 1, **characterized in that** its thickness is from 2 to 30 mm in the unthickened edge region and from 4 to 40 mm in the thickened edge region.

10. Laminated sheet according to one or more of Claims 1 to 9, **characterized in that** the phenol/formaldehyde resin contains a flame-retardant additive.

11. Laminated sheet according to Claim 1, **characterized in that** the decorative layers (19; 20) comprise a plastics, paper or wood sheet and/or a lacquer layer and have a basis weight of from 60 to 420 g/m², in particular from 140 to 300 g/m².

12. Laminated sheet according to Claim 11, **characterized in that** the decorative layers (19; 20) comprise a crosslinked acrylic, urethane, epoxy or melamine resin, **in that** the acrylic resin is pigmented and wherein fillers and/or dyes have been added to the resin.

13. Laminated sheet according to Claim 1, **characterized in that** the decorative layers (19; 20) comprise decorative papers which have been impregnated with melamine resin.

14. Process for the production of a hot-mouldable laminated sheet according to one or more of Claims 1 to 13, **characterized by** inserting a prefabricated sheet (2) of wood and/or cellulose fibres into an open press which contains a mould (18) provided with one or more cavities and a smooth mould (21), arranging the material from which the sheet (2) had been produced along at least one of the edge regions of the sheet, applying one or two decorative layers (19; 20) to the surface(s) of the sheet (2) combined with the material, and hot-pressing all parts present between the moulds.

15. Process according to Claim 14, **characterized in that** at least one strip (4; 7; 8) produced from the same material as the sheet (2) is applied as material along one of the edge regions of the sheet (2).

16. Process according to Claim 14, **characterized in that** one or more cavities (14 to 17) of the mould (18) is or are filled with the same wood and/or cellulose fibre material of which the prefabricated sheet (2) consists, and **in that** one or two decorative layers (19; 20) are applied to the surface(s) of the sheet combined with the wood and/or cellulose fibre material in the cavity or cavities and are pressed together with heat and pressure between the moulds (18; 21).

17. Process according to Claim 14, **characterized in that** the parts are pressed together in the mould at a temperature of from 130 to 180°C and with a pressure of from 60 to 110 bar.

## Revendications

1. Panneau moulé sous pression déformable à chaud, qui est constitué d'un noyau et d'éléments liés à celui-ci par compression à chaud, et qui présente une couche décorative sur une ou sur les deux faces du noyau et des éléments qui sont liés à celui-ci, **caractérisé en ce que** comme noyau est prévu un panneau plat préfabriqué (2) constitué de fibres de bois et/ou de cellulose qui sont imprégnées de résine phénol-formaldéhyde durcie à chaud, et **en ce que** le panneau (2) est épaissi le long d'une ou de plusieurs de ses zones de bord (3, 4, 26, 27) en utilisant le même matériau que celui dont est constitué le panneau préfabriqué, la densité étant réalisée pour être largement uniforme sur la zone non épaissie et sur la zone épaissie du panneau moulé sous pression (1).

2. Panneau moulé sous pression selon la revendication 1, **caractérisé en ce que** le matériau est constitué de bandes préfabriquées (7) qui présentent une section transversale de forme rectangulaire.

3. Panneau moulé sous pression selon la revendication 1, **caractérisé en ce que** le matériau est constitué de bandes préfabriquées (8) qui présentent une section transversale de type rectangulaire avec un côté de section transversale en arc (9).

4. Panneau moulé sous pression selon la revendication 1, **caractérisé en ce que** le matériau est constitué de bandes préfabriquées (4) qui présentent une section transversale de type trapézoïdal avec un côté oblique (6), qui définit avec la surface de base de la bande un angle α compris entre 20 et 70°, en particulier de 45°.

5. Panneau moulé sous pression selon une des revendications 2 à 4, **caractérisé en ce que** les bandes (4, 7, 8) se terminent par les bords (10, 11, 12, 13) du panneau plat préfabriqué (2) et **en ce que** le coté de section transversale en arc (9) des bandes (8) ou le côté oblique (6) des bandes (4) est orienté vers l'intérieur du panneau (2) en s'éloignant des bords.

6. Panneau moulé sous pression selon la revendication 1, **caractérisé en ce que** le matériau utilisé pour épaissir les zones de bord du panneau (2) est constitué de fibres de bois et/ou de cellulose libres imprégnées de résine qui remplissent une ou plusieurs cavités (14, 15, 16, 17) d'un moule (18), moyennant quoi le panneau plat préfabriqué (2) ainsi que le matériau peuvent être comprimés entre ledit moule (18) et un autre moule (21) en même temps qu'une ou deux couches décoratives (19 ; 20) pour former le panneau moulé sous pression.

7. Panneau moulé sous pression selon les revendications 1 à 6, **caractérisé en ce qu'**une zone de bord (22), deux zones de bord opposées (22, 24), trois (22, 23, 24) ou la totalité des quatre zones de bord (22, 23, 24, 25) du panneau moulé sous pression (1) sont épaissies.

8. Panneau moulé sous pression selon la revendication 1, **caractérisé en ce que** qu'il présente une densité uniforme de l'ordre de 1,1 à 1,5 g/cm³, en particulier de 1,4 g/cm³ sur la totalité de sa section, y compris ses zones épaissies.

9. Panneau moulé sous pression selon la revendication 1, **caractérisé en ce que** son épaisseur est comprise entre 2 et 30 mm dans la zone de bord non épaissie et entre 4 et 40 mm dans la zone de bord épaissie.

10. Panneau moulé sous pression selon une ou plusieurs des revendications 1 à 9, **caractérisé en ce que** la résine phénol-formaldéhyde contient un additif ignifuge.

11. Panneau moulé sous pression selon la revendication 1, **caractérisé en ce que** les couches décoratives (19 ; 20) sont constituées d'une feuille de matière plastique, de papier ou de bois et/ou d'une couche de laque, et présentent un grammage compris entre 60 et 420 g/m², en particulier entre 140 et 300 g/m².

12. Panneau moulé sous pression selon la revendication 11, **caractérisé en ce que** les couches décoratives (19 ; 20) sont constituées de résine acrylique, d'uréthanne, époxy ou de mélamine, **en ce que** la résine acrylique est pigmentée, et **en ce que** des charges et/ou des colorants sont ajoutés à la résine.

13. Panneau moulé sous pression selon la revendication 1, **caractérisé en ce que** les couches décoratives (19 ; 20) sont constituées de papier décor qui est imprégné de résine de mélamine.

14. Procédé de fabrication d'un panneau moulé sous pression déformable à chaud selon une ou plusieurs des revendications 1 à 13, **caractérisé par** la mise en place d'un panneau préfabriqué (2) constitué de fibres de bois et/ou de cellulose dans une presse ouverte qui comprend un moule (18) muni d'une ou de plusieurs cavités et un moule lisse (21), l'agencement du même matériau que celui dont est fabriqué le panneau (2) le long d'au moins une zone de bord du panneau, l'application d'une ou de deux couches décoratives (19 ; 20) sur la/les surface(s) du panneau (2) assemblé au matériau, et la compression à chaud de tous les éléments se trouvant entre les moules.

15. Procédé selon la revendication 14, **caractérisé en ce qu'**au moins une bande (4 ; 7 ; 8) fabriquée dans le même matériau que le panneau (2) est appliquée en tant que matériau le long d'une des zones de bord du panneau (2).

16. Procédé selon la revendication 14, **caractérisé en ce qu'**une ou plusieurs cavités (14 à 17) du moule (18) est/sont remplie(s) du même matériau de fibres de bois et/ou de cellulose que celui dont est constitué le panneau préfabriqué (2), et **en ce qu'**une ou deux couches décoratives (19 ; 20) sont appliquées sur la/les surface(s) du panneau assemblé au matériau en fibres de bois et/ou de cellulose dans la/les cavité(s) et sont comprimées les unes avec les autres entre les moules (18; 21) sous l'application de chaleur et de pression.

17. Procédé selon la revendication 14, **caractérisé en ce que** les éléments sont comprimés les uns avec les autres dans le moule à une température comprise entre 130 et 180° C, et à une pression comprise entre 60 et 110 bars.
